# EUROPEAN PATENT APPLICATION

(11) **EP 1 965 375 A1**
(43) Date of publication of application: **03.09.2008**
(21) Application number: 07254482.8
(22) Date of filing: 16.11.2007
(51) Int. Cl.: G11B 5/82

(54) **Nanoimprinting of topography for patterned magnetic media**

(30) Priority: 28.02.2007 US 712644
(71) Applicant: Hitachi Global Storage Technologies Netherlands B.V., 1076 AZ Amsterdam (NL)
(72) Inventor: Katine, Jordan A., Moutain View, CA, 94041 (US); MacDonald, Scott A., San Jose, CA, 95128 (US); Roberston, Neil L., Palo Alto, CA, 94301 (US)
(74) Representative: Calderbank, Thomas Roger

(57) **Abstract**

One embodiment in accordance with the invention is a method comprising depositing a material above a disk substrate. The disk substrate is for a data storage device. The material above the disk substrate can be nanoimprinted. The material can be processed to transform it into a substantially solidified material. A magnetic material can be deposited on the substantially solidified material.

## Description

Hard disk drives are used in almost all computer system operations. In fact, most computing systems are not operational without some type of hard disk drive (HDD) to store the most basic computing information such as the boot operation, the operating system, the applications, and the like. In general, the hard disk drive is a device which may or may not be removable, but without which the computing system will generally not operate.

The basic hard disk drive model includes a storage disk or hard disk that spins at a designed rotational speed. An actuator arm is utilized to reach out over the disk. The arm carries a head assembly that has a magnetic read/write transducer or head for reading/writing information to or from a location on the disk. The transducer is attached to a slider, such as an air-bearing slider, which is supported adjacent to the data surface of the disk by a cushion of air generated by the rotating disk. The transducer can also be attached to a contact-recording type slider. In either case, the slider is connected to the actuator arm by means of a suspension. The complete head assembly, e.g., the suspension and head, is called a head gimbal assembly (HGA).

In operation, the hard disk is rotated at a set speed via a spindle motor assembly having a central drive hub. Additionally, there are tracks evenly spaced at known intervals across the disk. When a request for a read of a specific portion or track is received, the hard disk aligns the head, via the arm, over the specific track location and the head reads the information from the disk. In the same manner, when a request for a write of a specific portion or track is received, the hard disk aligns the head, via the arm, over the specific track location and the head writes the information to the disk.

Over the years, the disk and the head have undergone great reductions in their size. Much of the refinement has been driven by consumer demand for smaller and more portable hard drives such as those used in personal digital assistants (PDAs), MP3 players, and the like. For example, the original hard disk drive had a disk diameter of 24 inches. Modern hard disk drives are much smaller and include disk diameters of less than 2.5 inches (micro drives are significantly smaller than that). Advances in magnetic recording are also primary reasons for the reduction in size.

This continual reduction in size has placed steadily increasing demands on the technology used in the HGA, particularly in terms of power consumption, shock performance, and disk real estate utilization. One recent advance in technology has been the development of the Femto slider, which is roughly one-third of the size and mass of the older Pico slider, which it replaces; over the past 23 years, slider size has been reduced by a factor of five, and mass by a factor of nearly 100.

A more recent development for achieving increased areal density magnetic recording for hard disk drives is to utilize patterned magnetic media. However, one of the disadvantages associated with patterned magnetic media is that its fabrication can be expensive.

One embodiment in accordance with the invention is a method comprising depositing a material above a disk substrate. The disk substrate is for a data storage device. The material above the disk substrate can be nanoimprinted. The material can be processed to transform it into a substantially solidified material. A magnetic material can be deposited on the substantially solidified material.

### BRIEF DESCRIPTION IN THE DRAWINGS:

Figure 1 is a plan view of an exemplary HDD with cover and top magnet removed in accordance with one embodiment of the present invention.
Figures 2A-2G are exemplary side sectional views for creating patterned magnetic media in accordance with various embodiments of the invention.
Figures 2H-2L are exemplary side sectional views for creating patterned magnetic media in accordance with various embodiments of the invention.
Figure 3 is a plan view of a section of an exemplary patterned magnetic media in accordance with various embodiments of the invention.
Figure 4 is a plan view of a section of another exemplary patterned magnetic media in accordance with various embodiments of the invention.
Figure 5 is a plan view of a section of yet another exemplary patterned magnetic media in accordance with various embodiments of the invention.
Figure 6 is a plan view of a section of still another exemplary patterned magnetic media in accordance with various embodiments of the invention.
Figure 7 is a plan view of a section of another exemplary patterned magnetic media in accordance with various embodiments of the invention.
Figure 8 is a plan view of a section of yet another exemplary patterned magnetic media in accordance with various embodiments of the invention.
Figure 9 is a flow diagram of an exemplary method in accordance with various embodiments of the invention.

Reference will now be made in detail to various embodiments in accordance with the invention, examples of which are illustrated in the accompanying drawings. While the invention will be described in conjunction with various embodiments, it will be understood that these various embodiments are not intended to limit the invention. On the contrary, the invention is intended to cover alternatives, modifications and equivalents, which may be included within the scope of the invention as construed according to the Claims, as interpreted by the description and drawings.

Furthermore, in the following detailed description of various embodiments in accordance with the invention, numerous specific details are set forth in order to provide a thorough understanding of the invention. However, it will be recognized by one of ordinary skill in the art that the invention may be practiced without these specific details. In other instances, well known methods, procedures, components, and circuits have not been described in detail as not to unnecessarily obscure aspects of the invention.

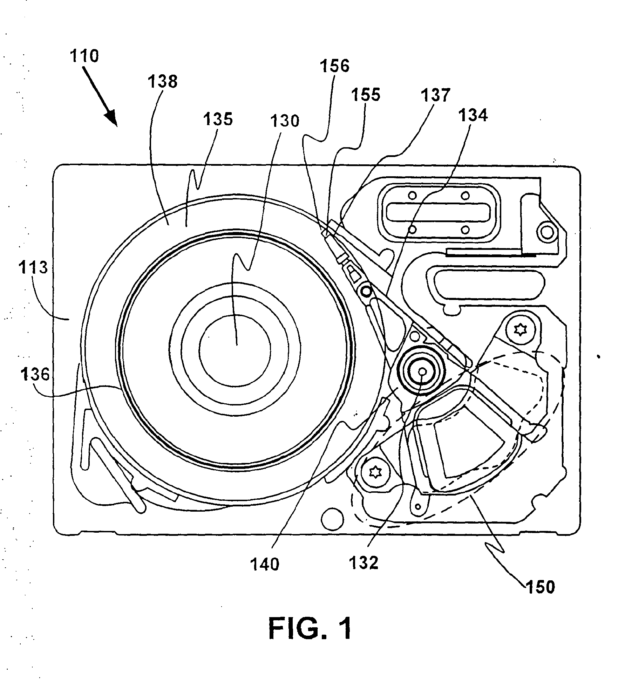

With reference now to Figure 1, a plan view of an exemplary hard disk drive (HDD) 110 with cover and top magnet removed is shown in accordance with one embodiment of the invention. Figure 1 illustrates the relationship of components and sub-assemblies of HDD 110 and a representation of data tracks 136 recorded on the disk surfaces 135 (one shown) of disk 138. The cover is removed and not shown so that the inside of HDD 110 is visible. The components are assembled into base casting 113, which provides attachment and registration points for components and sub-assemblies. The HDD 110 can be referred to as a data storage device.

A plurality of suspension assemblies 137 (one shown) are attached to the actuator arms 134 (one shown) in the form of a comb. A plurality of transducer heads or sliders 155 (one shown) are attached respectively to the suspension assemblies 137. Sliders 155 are located proximate to the disk surfaces 135 for reading and writing data with magnetic heads 156 (one shown). Note that the sliders 155 can include Head Gimbal Assemblies (HGAs), not shown, that are associated with the magnetic heads 156. The rotary voice coil motor 150 rotates actuator arms 134 about the actuator shaft 132 in order to move the suspension assemblies 137 to the desired radial position on disks 138. The actuator shaft 132, hub 140, actuator arms 134, and voice coil motor 150 may be referred to collectively as a rotary actuator assembly.

Data is recorded onto disk surfaces 135 of disk 138 in a pattern of concentric rings known as data tracks 136. Disk surface 135 is spun at high speed by means of a motor-hub assembly 130. Data tracks 136 are recorded onto spinning disk surfaces 135 by means of magnetic heads 156, which typically reside at the end of sliders 155. Figure 1 being a plan view shows only one head, slider, and disk surface combination. One skilled in the art understands that what is described for one head-disk combination applies to multiple head-disk combinations, such as disk stacks (not shown). However, for purposes of brevity and clarity, Figure 1 only shows one head and one disk surface.

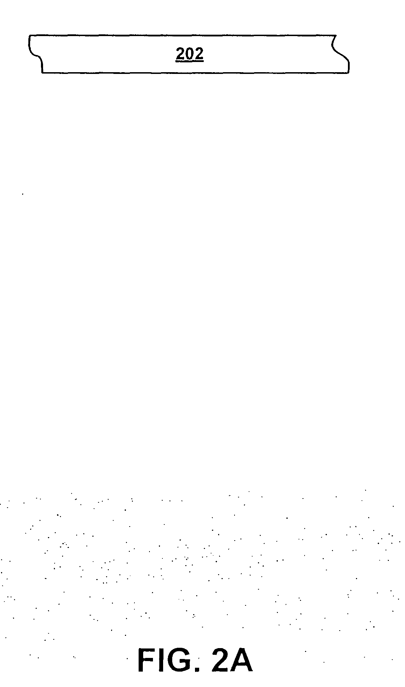

Figures 2A-2G are exemplary side sectional views for nanoimprinting of topology for patterned magnetic media in accordance with various embodiments of the invention. Specifically, Figure 2A is a side section view of an exemplary disk substrate 202 that can be utilized in accordance with various embodiments of the invention. It is pointed out that the disk substrate 202 can be implemented in a wide variety of ways. For example in one embodiment, the disk substrate 202 can be a disk substrate that is typically utilized to fabricate a disk for a hard disk drive (e.g., 110), but is not limited to such.

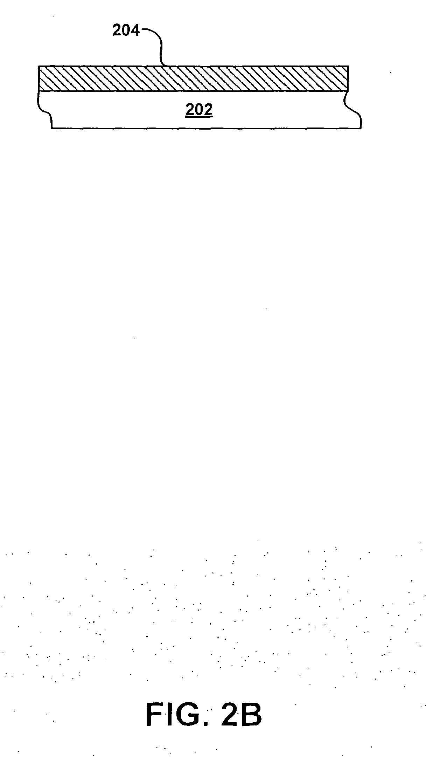

Figure 2B is a side section view illustrating that a topology material 204 can be deposited above the disk substrate 202 in accordance with various embodiments of the invention. It is noted that the topology material 204 deposited above the disk substrate 202 can be utilized to nanoimprint a topology that may include high and low areas on the disk substrate 202, which can function as a foundation for patterned magnetic media.

The topology material 204 can be implemented in a wide variety of ways. For example in one embodiment, the topology material 204 can be implemented in a substantially liquid state (or a non-solid state) thereby enabling the nanoimprinting of it. In one embodiment, the topology material 204 can include any material that can withstand magnetic media deposition temperatures on the order of 200-300°C, can have a smooth top surface, and can be durable due to possible interactions with a recording head (e.g., 156) of a hard disk drive (e.g., 110), but is not limited to such. The topology material 204 can include, but is not limited to, hydrogen silsesquioxane (HSQ), a polyamide, a polyamide based polymer, a silicon containing resist, a heated material that is solid at room temperature, and the like. It is noted that the topology material 204 can be deposited above the disk substrate in a wide variety of ways. For example in one embodiment, the topology material 204 can be sputtered above the disk substrate 202, but is not limited to such.

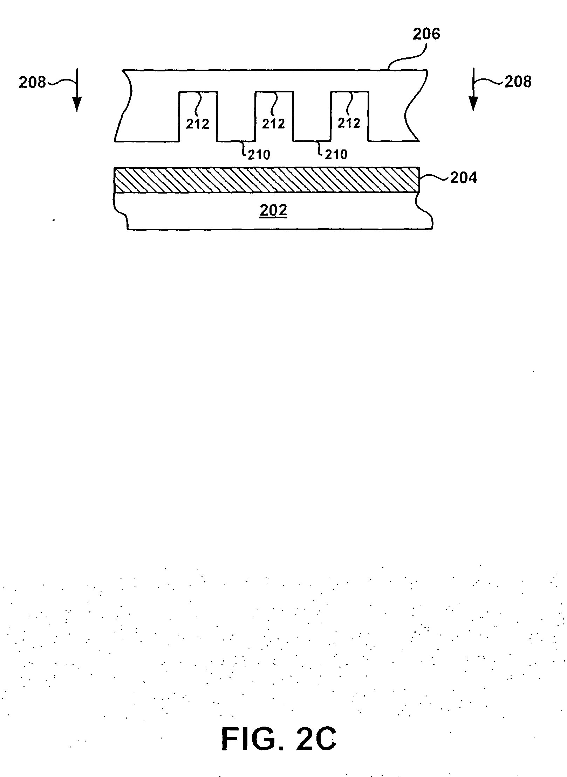

Figure 2C is a side sectional view of a nanoimprinting mask 206 that can be utilized to nanoimprint the topology material 204 deposited above the disk substrate 202, in accordance with various embodiments of the invention. The nanoimprinting mask 206 can be utilized for patterning the topology material 204, which can remain on or above the disk substrate 202. In one embodiment; the nanoimprinting mask 206 can include one or more protrusions 210 along with one or more recesses 212 for molding the topology material 204. A downward force (as indicated by arrows 208) can be applied to the nanoimprinting mask 206 that can cause it to move in a downward direction in order to subsequently mold the topology material 204.

Note that the nanoimprinting mask 206 can be implemented in a wide variety of ways. For example in one embodiment, the nanoimprinting mask 206 can be implemented with one or more polymers, but is not limited to such. In one embodiment, the one or more protrusions 210 along with the one or more recesses 212 of the nanoimprinting mask 206 can each be implemented with type of shape or form.

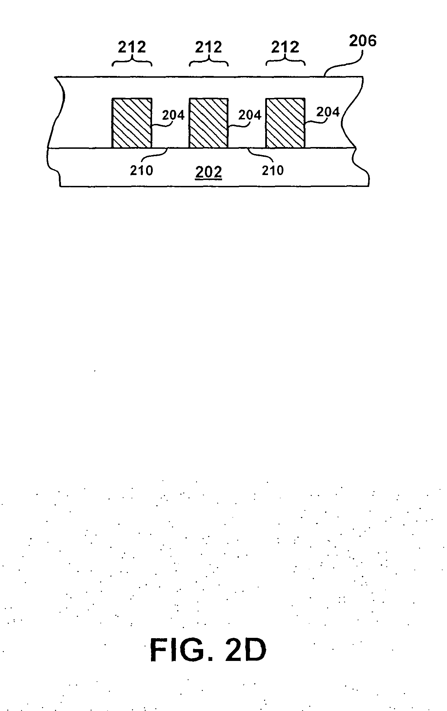

Figure 2D is a side sectional view of the nanoimprinting mask 206 pressed down onto the disk substrate 202 and molding the topology material 204, in accordance with various embodiments of the invention. It is pointed out that as the one or more protrusions 210 of the nanoimprinting mask 206 are pressed down into contact with the topology material 204 they displace or force the topology material 204 into the one or more recesses 212 of the nanoimprinting mask 206. When the one or more protrusions 210 of the nanoimprinting mask 206 come into substantially contact the disk substrate 202, the topology material 204 can be molded into a particular form as defined by the one or more protrusions 210 and the one or more recesses 212 of the nanoimprinting mask 206.

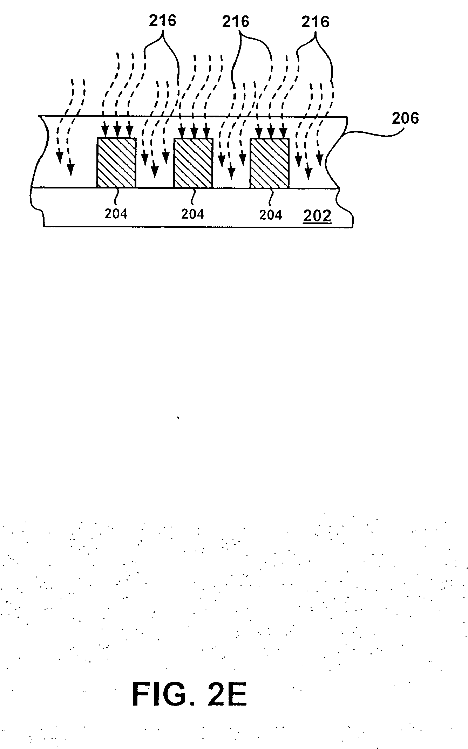

Figure 2E is a side sectional view of a process for transforming the topology material 204 from a substantially liquid (or non-solid state) into a substantially solidified material during the nanoimprinting of the topology material 204, in accordance with various embodiments of the invention. Specifically, during the nanoimprinting process wherein the topology material 204 is molded into a particular form as defined by the one or more protrusions 210 and the one or more recesses 212 of the nanoimprinting mask 206, the topology material 204 can be transformed from a substantially liquid (or non-solid state) into a substantially solidified material. It is noted that the transformation process can be implemented in a wide variety of ways. For example in one embodiment, the transformation process can include utilizing radiation (represented by dashed arrows 216) that can pass through the nanoimprinting mask 206 and cure the topology material 204 into a substantially solidified material. The radiation can include, but is not limited to, optical radiation, ultraviolet (UV) radiation or light, electronic beam radiation, and the like. In one embodiment, the topology material 204 can be transformed thermally from a substantially liquid (or non-solid state) into a substantially solidified material. In an embodiment, the topology material 204 can be transformed from a substantially liquid (or non-solid state) into a substantially solidified material by cooling or freezing the topology material 204.

For example in one embodiment, if the topology material 204 is hydrogen silsesquioxane and it is exposed to electron beam radiation 216 and moisture (not shown), it scissions off its polymer and can form silicon dioxide (SiO₂), which is substantially solid. In an embodiment, if the topology material 204 is silicon containing resist and it is exposed to UV radiation or thermal radiation, it can cure into silicon dioxide (SiO₂).

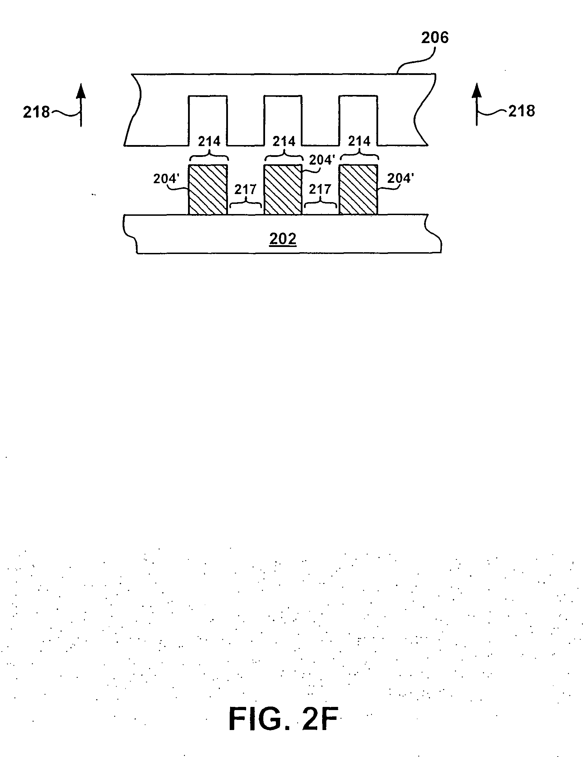

Figure 2F is a side sectional view of the nanoimprinting mask 206 lifting off from the substantially solidified topology material 204' and the disk substrate 202, in accordance with various embodiments of the invention. Specifically, once the topology material 204 has been transformed from a substantially liquid (or non-solid state) into a substantially solidified topology material 204', an upward force (represented by arrows 218) can be applied to the nanoimprinting mask 206 in order to cause it to lift off from the disk substrate 202 and the substantially solidified topology material 204'. It is noted that once the nanoimprinting mask 206 is lifted off, the substantially solidified topology material 204' can include one or more elevated areas 214. Furthermore, the substantially solidified topology material 204' can be implemented as one or more pillars, columns, mounds, protrusions, and/or plateaus, but is not limited to such, that are above the disk substrate 202. In one embodiment, once the nanoimprinting mask 206 is lifted off, the substantially solidified topology material 204' can create lands (or elevated areas) 214 and grooves (or lower areas) 217 above the disk substrate 202.. In an embodiment, the one or more protrusions of substantially solidified topology material 204' can be on the order of approximately 20-40 nanometers in height, but are not limited to such.

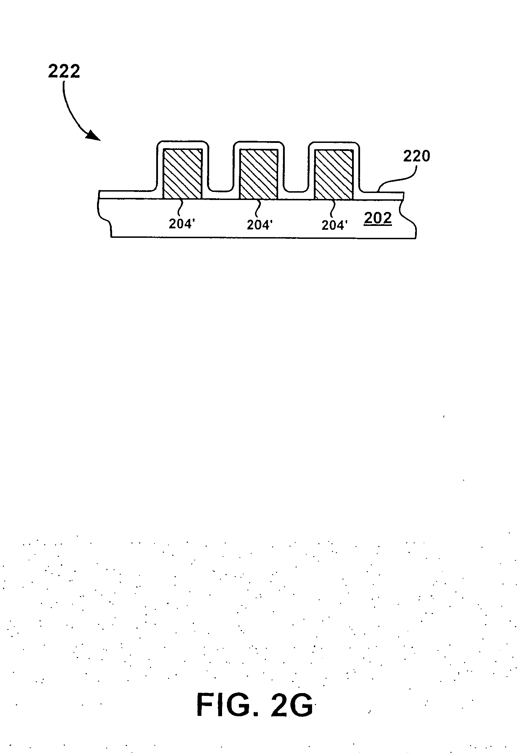

Figure 2G is a side section view illustrating that one or more magnetic materials and appropriate underlayers and protection coatings 220 can be deposited above the substantially solidified topology material 204' and the disk substrate 202 in accordance with various embodiments of the invention. It is noted that by depositing the magnetic material, underlayers, and coatings 220 above the disk substrate 202 and the substantially solidified topology material 204', a patterned magnetic media 222 can be generated or formed. With the magnetic material, underlayers, and coatings 220 deposited above the disk substrate 202 and the substantially solidified topology material 204', the substantially solidified topology material 204' can define data bits for patterned magnetic media recording. It is pointed out that the substantially solidified topology material 204' can define one or more high zones (e.g., 214) and one or more low zones (e.g., 217) of the patterned magnetic media 222. Note that in one embodiment, the patterned magnetic media 222 can be installed or incorporated with a read writeable hard disk drive (e.g., 110).

The magnetic material 220 can be implemented in a wide variety of ways. For example in various embodiments, the magnetic material 220 can include cobalt platinum chrome, any hard disk alloys, cobalt platinum, any quintanary alloys, chrome, but is not limited to such. It is noted that the magnetic material, underlayers, and coatings 220 can be deposited above the substantially solidified topology material 204' and the disk substrate 202 in a wide variety of ways. For example in one embodiment, the magnetic material, underlayers, and coatings 220 can be sputtered above the substantially solidified topology material 204' and the disk substrate 202, but is not limited to such.

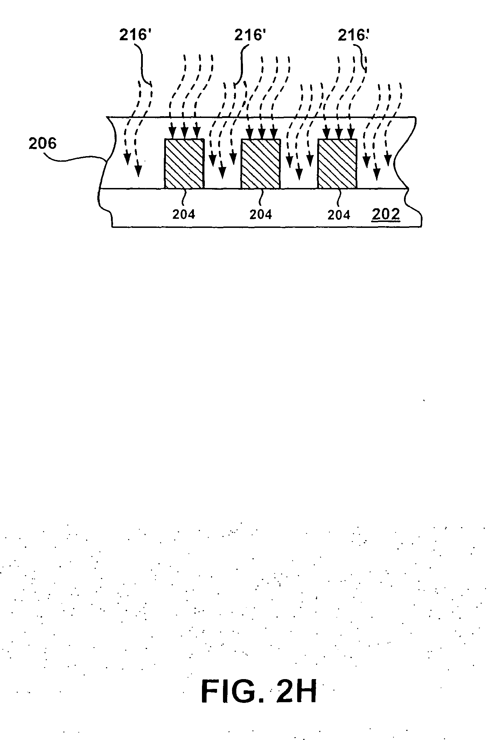

It is pointed that that an alternate sequence of events that are different from the sequence show in Figures 2E-2G can be implemented in accordance with various embodiments of the invention. For example, Figures 2H-2L are exemplary side sectional views for creating substantially solidified topography for patterned magnetic media in accordance with various embodiments of the invention. Note that Figures 2H-2L can be substituted for Figures 2E-2G. As such, Figures 2A-2D can occur in a manner similar to that described herein before Figures 2H-2L.

Figure 2H is a side sectional view of beginning a process for transforming the topology material 204 from a substantially liquid (or non-solid state) into a substantially solidified material, in accordance with various embodiments of the invention. Specifically, during the nanoimprinting process wherein the topology material 204 is molded into a particular form as defined by the one or more protrusions 210 and the one or more recesses 212 of the nanoimprinting mask 206, a transformation process can be initiated or begun to partially solidify the topology material 204 just enough to enable the removal of the nanoimprinting mask 206. It is noted that the transformation process begun in Figure 2H can be implemented in a wide variety of ways. For example in one embodiment, the transformation process can include utilizing radiation (represented by dashed arrows 216') that can pass through the nanoimprinting mask 206 and begin to partially solidify or harden the topology material 204. The radiation 216' can include, but is not limited to, optical radiation, ultraviolet (UV) radiation or light, electronic beam radiation, and the like. In one embodiment, the transformation process can include utilizing a thermal process to begin to partially solidify or harden the topology material 204. In an embodiment, the transformation process can include utilizing a cooling or freezing process to begin to partially solidify or harden the topology material 204.

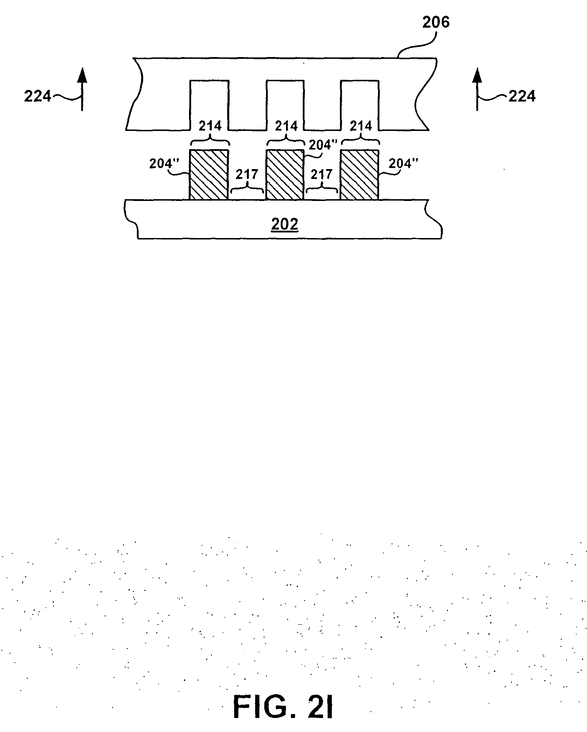

Figure 2I is a side sectional view of the nanoimprinting mask 206 lifting off from the partially solidified topology material 204" and the disk substrate 202, in accordance with various embodiments of the invention. Specifically, once the topology material 204 has been transformed from a substantially liquid (or non-solid state) into just enough of a partially solidified topology material 204" to enable the removal of the nanoimprinting mask 206, an upward force (represented by arrows 244) can be applied to the nanoimprinting mask 206 to cause it to lift off from the partially solidified topology material 204" and the disk substrate 202. Once the nanoimprinting mask 206 is lifted off, the partially solidified topology material 204" can include one or more elevated areas 214. Also, the partially solidified topology material 204" can be implemented as one or more pillars, columns, mounds, protrusions, and/or plateaus, but is not limited to such, that are above the disk substrate 202. In one embodiment, once the nanoimprinting mask 206 is lifted off, the partially solidified topology material 204" can create lands (or elevated areas) 214 and grooves (or lower areas) 217 above the disk substrate 202. In an embodiment, the one or more protrusions of partially solidified topology material 204" can be on the order of approximately 20-40 nanometers in height, but are not limited to such.

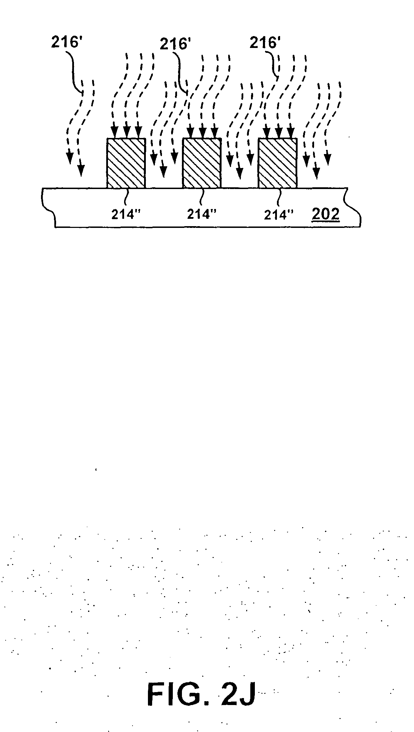

Figure 2J is a side sectional view of a finishing process for transforming the partially solidified topology material 204" into a substantially solidified material, in accordance with various embodiments of the invention. It is pointed out that a partially solidified material is in a less solid state than a substantially solidified material. Within Figure 2J, after the nanoimprinting mask 206 has been lifted off, a finishing or final transformation process can be initiated or begun to change the partially solidified topology material 204" into a substantially solidified material (or a substantially solid material). It is pointed out that this transformation process can be implemented in a wide variety of ways. For example in one embodiment, the transformation process can include utilizing radiation (represented by dashed arrows 216') that can cure the partially solidified topology material 204" into a substantially solidified material. The radiation can include, but is not limited to, optical radiation, ultraviolet (UV) radiation or light, electronic beam radiation, and the like. In one embodiment, the partially solidified topology material 204" can be transformed thermally into a substantially solidified material. In an embodiment, the partially solidified topology material 204" can be transformed into a substantially solidified material by cooling or freezing the partially solidified topology material 204".

In one embodiment, it is noted that the finishing transformation process described with reference to Figure 2J can be implemented in a batch mode. For example, the batch mode can include multiple substrates (e.g., 202) which each include partially solidified topology material (e.g., 204") that can be subjected to the finishing transformation process at the same time.

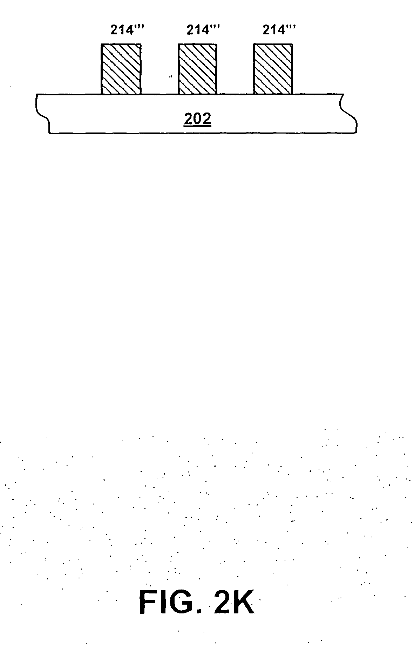

Figure 2K is a side sectional view of the substantially solidified topology material 204"' and the disk substrate 202, in accordance with various embodiments of the invention. Specifically, once the finishing process of Figure 2J has transformed the partially solidified topology material 204" into the substantially solidified material 204"', the disk substrate 202 and the substantially solidified topology material 204"' can be further processed. It is pointed out that a substantially solidified material is in a more solid state than a partially solidified material.

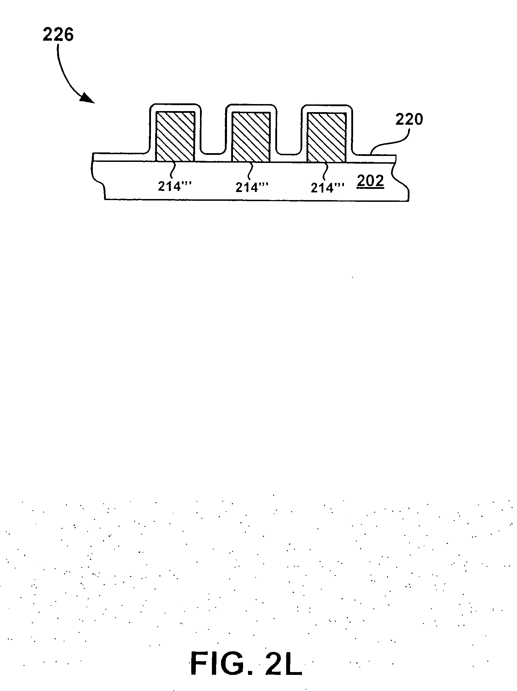

Figure 2L is a side section view illustrating that one or more magnetic materials, appropriate underlayers, and protection coatings 220 can be deposited above the substantially solidified topology material 204"' and the disk substrate 202 in accordance with various embodiments of the invention. Note that by depositing the magnetic material, underlayers, and coatings 220 above the disk substrate 202 and the substantially solidified topology material 204"', a patterned magnetic media 226 can be generated or formed. With the magnetic material, underlayers, and coatings 220 deposited above the disk substrate 202 and the substantially solidified topology material 204"', the substantially solidified topology material 204"' can define data bits for patterned magnetic media recording. It is pointed out that the substantially solidified topology material 204"' can define one or more high zones (e.g., 214) and one or more low zones (e.g., 217) of the patterned magnetic media 226. In one embodiment, the patterned magnetic media 226 can be installed or incorporated with a read writeable hard disk drive (e.g., 110).

The magnetic material 220 can be implemented in a wide variety of ways. For example in various embodiments, the magnetic material 220 can include cobalt platinum chrome, any hard disk alloys, cobalt platinum, any quintanary alloys, chrome, but is not limited to such. Note that the magnetic material, underlayers, and coatings 220 can be deposited above the substantially solidified topology material 204"' and the disk substrate 202 in a wide variety of ways. For example in one embodiment, the magnetic material, underlayers, and coatings 220 can be sputtered above the substantially solidified topology material 204'" and the disk substrate 202, but is not limited to such.

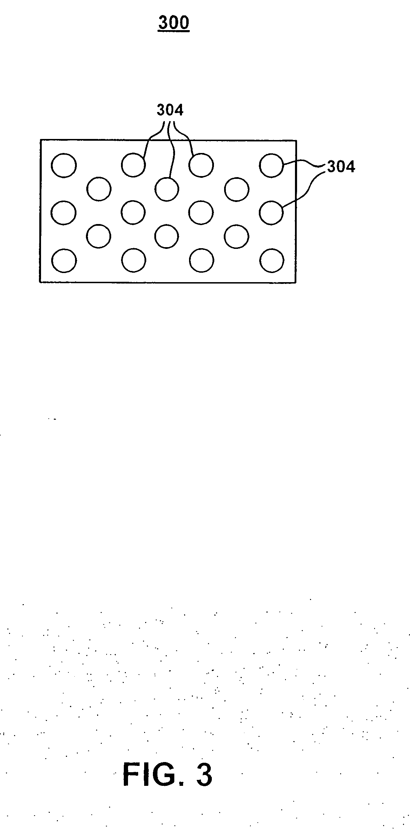

Figure 3 is a plan view of a section of an exemplary patterned magnetic media 300 in accordance with various embodiments of the invention. It is pointed that the patterned magnetic media 300 can be implemented in any manner similar to any patterned magnetic media described herein, but is not limited to such. The patterned magnetic media 300 can include one or more substantially solidified topology material 304 that can each be implemented as a pillar, column, mound, protrusion, and/or plateau, but is not limited to such. Furthermore, each cross section of the one or more substantially solidified topology material 304 can be circular or substantially circular (not shown) shaped. In one embodiment, with multiple substantially solidified topology material 304, they can be packed in a hexagonal packing structure, or in an efficient fashion, but is not limited to such.

It is noted that the one or more substantially solidified topology material 304 of the patterned magnetic media 300 can be implemented in a wide variety of ways. For example in various embodiments, the one or more substantially solidified topology material 304 can be implemented such that they are a little narrower and longer or a little bit wider and shorter. ln one embodiment, multiple substantially solidified topology material 304 can be laid out in concentric circles above the disk substrate (e.g., 202). In various embodiments, each of the substantially solidified topology material 304 can be implemented progressively longer along a track or wider going across tracks of patterned magnetic media 300. In an embodiment, multiple substantially solidified topology material 304 can be laid out in certain one or more areas in order to provide some servo information, which may include a little bit more complicated pattern.

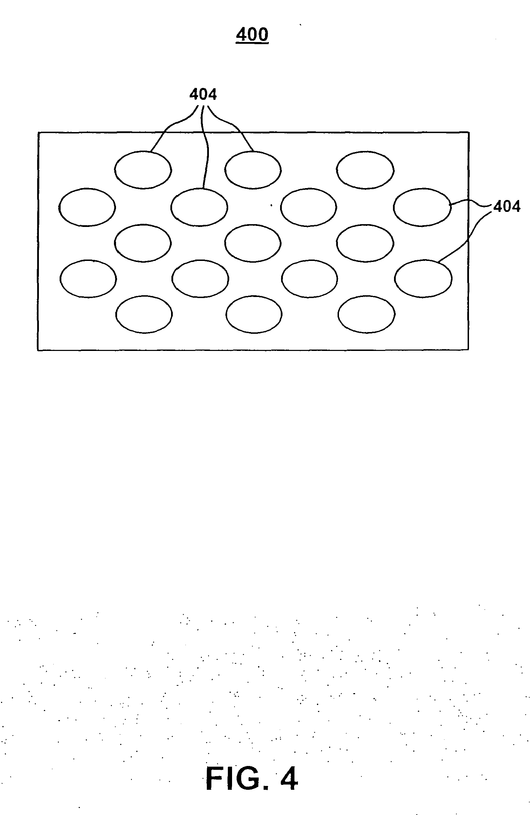

Figure 4 is a plan view of a section of an exemplary patterned magnetic media 400 in accordance with various embodiments of the invention. Note that the patterned magnetic media 400 can be implemented in any manner similar to any patterned magnetic media described herein, but is not limited to such. The patterned magnetic media 400 can include one or more substantially solidified topology material 404 that can each be implemented as a pillar, column, mound, protrusion, and/or plateau, but is not limited to such. Additionally, each cross section of the one or more substantially solidified topology material 404 can be oval or substantially oval shaped (not shown).

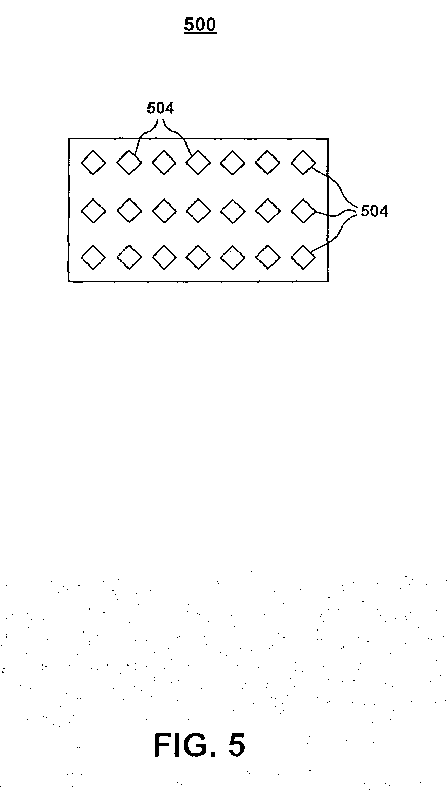

Figure 5 is a plan view of a section of an exemplary patterned magnetic media 500 in accordance with various embodiments of the invention. It is noted that the patterned magnetic media 500 can be implemented in any manner similar to any patterned magnetic media described herein, but is not limited to such. The patterned magnetic media 500 can include one or more substantially solidified topology material 504 that can each be implemented as a pillar, column, mound, protrusion, and/or plateau, but is not limited to such. Moreover, each cross section of the one or more substantially solidified topology material 504 can be diamond or square shaped or substantially diamond shaped (not shown) or substantially square shaped (not shown).

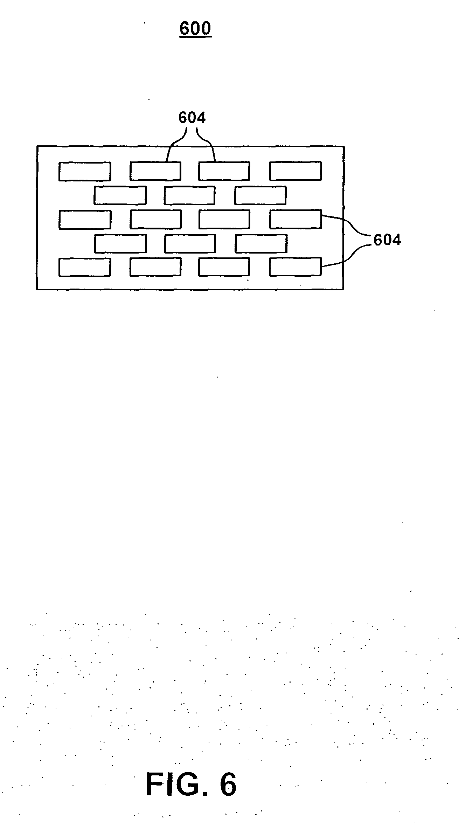

Figure 6 is a plan view of a section of an exemplary patterned magnetic media 600 in accordance with various embodiments of the invention. It is noted that the patterned magnetic media 600 can be implemented in any manner similar to any patterned magnetic media described herein, but is not limited to such. The patterned magnetic media 600 can include one or more substantially solidified topology material 604 that can each be implemented as a pillar, column, mound, protrusion, and/or plateau, but is not limited to such. Moreover, each cross section of the one or more substantially solidified topology material 604 can be rectangle or substantially rectangle shaped (not shown).

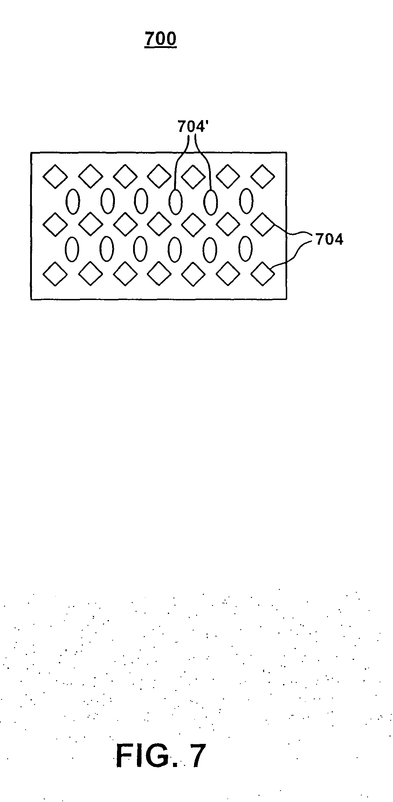

Figure 7 is a plan view of a section of an exemplary patterned magnetic media 700 in accordance with various embodiments of the invention. It is noted that the patterned magnetic media 700 can be implemented in any manner similar to any patterned magnetic media described herein, but is not limited to such. The patterned magnetic media 700 can include one or more substantially solidified topology material 704 and 704' that can each be implemented as a pillar, column, mound, protrusion, and/or plateau, but is not limited to such. Moreover, each cross section of the one or more substantially solidified topology material 704 can be diamond or square shaped or substantially diamond shaped (not shown) or substantially square shaped (not shown) while each cross section of the one or more substantially solidified topology material 704' can be oval or substantially oval shaped (not shown). In this manner, the patterned magnetic media 700 can include multiple cross section shapes of the substantially solidified topology material (e.g., 704 and 704').

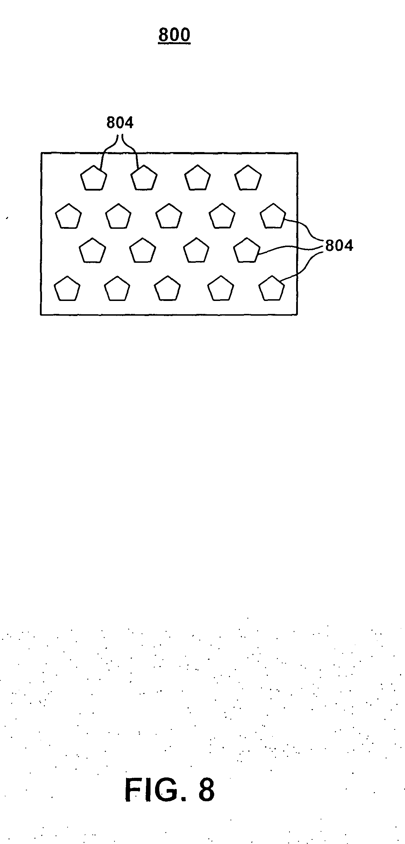

Figure 8 is a plan view of a section of an exemplary patterned magnetic media 800 in accordance with various embodiments of the invention. It is noted that the patterned magnetic media 800 can be implemented in any manner similar to any patterned magnetic media described herein, but is not limited to such. The patterned magnetic media 800 can include one or more substantially solidified topology material 804 that can each be implemented as a pillar, column, mound, protrusion, and/or plateau, but is not limited to such. Moreover, each cross section of the one or more substantially solidified topology material 804 can be a polygon or substantially polygon shaped (not shown). For example in an embodiment, each cross section of the one or more substantially solidified topology material 804 can be a pentagon or substantially pentagon shaped (not shown).

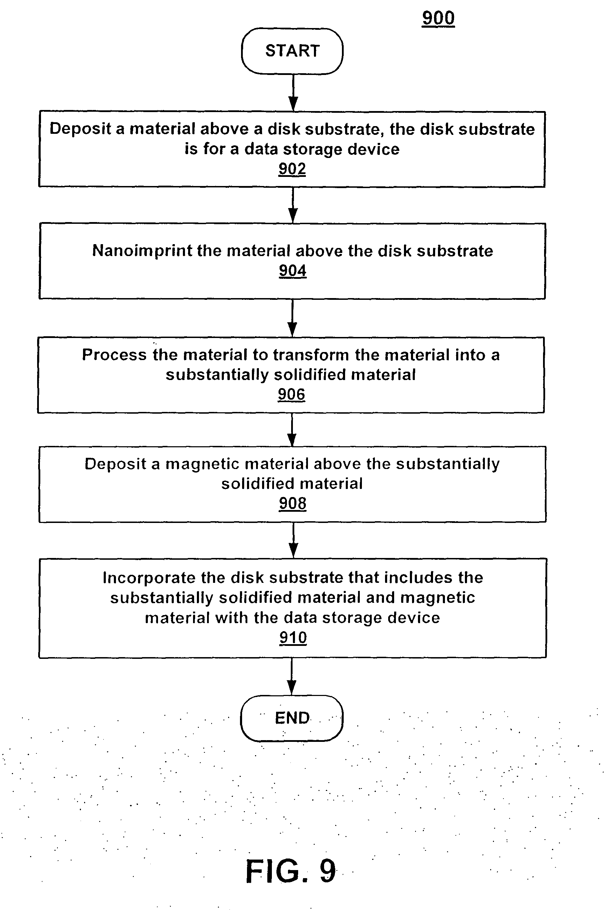

Figure 9 is a flow diagram of an exemplary method 900 in accordance with various embodiments of the invention for nanoimprinting of topology for patterned magnetic media. Method 900 can include exemplary processes of various embodiments of the invention that can be carried out by a processor(s) and electrical components under the control of computing device readable and executable instructions (or code), e.g., software. The computing device readable and executable instructions (or code) may reside, for example, in data storage features such as volatile memory, non-volatile memory, and/or mass data storage that can be usable by a computing device. However, the computing device readable and executable instructions (or code) may reside in any type of computing device readable medium. Note that method 900 can be implemented with application instructions on a computer-usable medium where the instructions when executed effect one or more operations of method 900. Although specific operations are disclosed in method 900, such operations are exemplary. Method 900 may not include all of the operations illustrated by Figure 9. Also, method 900 may include various other operations and/or variations of the operations shown by Figure 9. Likewise, the sequence of the operations of method 900 may be modified. It is noted that the operations of method 900 can be performed manually, by software, by firmware, by electronic hardware, or by any combination thereof.

Specifically, method 900 can include a material being deposited above a disk substrate, wherein the disk substrate is for a data storage device. The material above the disk substrate can be nanoimprinted. The material can be processed to transform the material into a substantially solidified material. A magnetic material can be deposited above the substantially solidified material. The disk substrate that includes the substantially solidified material and magnetic material can be implemented or incorporated with the data storage device.

At operation 902 of Figure 9, a material (e.g., 204) can be deposited above a disk substrate (e.g., 202), wherein the disk substrate can be for a data storage device (e.g., HDD 110). It is pointed out that operation 902 can be implemented in a wide variety of ways. For example in various embodiments, the material at operation 902 can include, but is not limited to, hydrogen silsesquioxane (HSQ), a polyamide, a polyamide based polymer, and a silicon containing resist. The material can be deposited above the disk substrate at operation 902 in any manner similar to that described herein, but is not limited to such.

At operation 904, the material above the disk substrate can be nanoimprinted. It is noted out that operation 904 can be implemented in a wide variety of ways. For example in various embodiments, the nanoimprinting of the material above the disk substrate can be implemented at operation 904 in any manner similar to that described herein, but is not limited to such.

At operation 906 of Figure 9, the material can be processed to transform the material into a substantially solidified material (e.g., 204' or 204"'). The substantially solidified material can define or include a topology that can include one or more elevated areas (or pillars or columns or plateaus). Note that operation 906 can be implemented in a wide variety of ways. For example in various embodiments, the processing of the material at operation 906 can include utilizing, but is not limited to, a curing process, an electron beam, radiation, a thermal process, an optical process, and cooling. In one embodiment, the processing of the material at operation 906 can occur during the nanoimprinting of the material. In an embodiment, the processing of the material at operation 906 can include beginning the process during the nanoimprinting and finishing the process after the nanoimprinting of the material. In one embodiment, the processing of the material at operation 906 can include beginning the process during the nanoimprinting to transform the material into a partially solidified material (e.g., 204") and finishing the process after the nanoimprinting to transform the partially solidified material into a substantially solidified material (e.g., 204'"). In an embodiment, the processing of the material at operation 906 can include beginning the process during the nanoimprinting of the material with a nanoimprinting mask (e.g., 206) to transform the material into a partially solidified material (e.g., 204") and finishing the process after the nanoimprinting mask is removed to transform the partially solidified material into a substantially solidified material (e.g., 204"'). Operation 906 can be implemented in any manner similar to that described herein, but is not limited to such.

At operation 908, a magnetic material (e.g., 220) can be deposited above the substantially solidified material. It is pointed out that operation 908 can be implemented in a wide variety of ways. For example in various embodiments, the magnetic material at operation 908 can include, but is not limited to, cobalt platinum chrome, any quintanary alloys, chrome, and cobalt platinum. In an embodiment, one or more magnetic materials can be deposited above the substantially solidified material at operation 908. In one embodiment, one or more magnetic materials, one or more appropriate underlayers, and one or more protective coatings can be deposited above the substantially solidified material at operation 908. Operation 908 can be implemented in any manner similar to that described herein, but is not limited to such.

At operation 910 of Figure 9, the disk substrate that includes the substantially solidified material and magnetic material can be installed or implemented or incorporated with the data storage device. It it noted that operation 910 can be implemented in a wide variety of ways. For example in various embodiments, the disk substrate that includes the substantially solidified material and magnetic material can be implemented or incorporated with the data storage device at operation 910 in any manner similar to that described herein, but is not limited to such.

The foregoing descriptions of various specific embodiments in accordance with the invention have been presented for purposes of illustration and description. They are not intended to be exhaustive or to limit the invention to the precise forms disclosed, and obviously many modifications and variations are possible in light of the above teaching. The invention can be construed according to the Claims and their equivalents.

## Claims

1. A method comprising:
depositing a material above a disk substrate, said disk substrate for a data storage device;
nanoimprinting said material above said disk substrate;
processing said material into a substantially solidified material; and
depositing a magnetic material above said substantially solidified material.

2. The method of Claim 1, wherein said material comprises hydrogen silsesquioxane.

3. The method of Claim 1, wherein said material comprises a polyamide.

4. The method of Claim 1, wherein said material comprises a silicon containing resist.

5. The method of Claim 1, wherein said processing comprises utilizing an electron beam.

6. The method of Claim 1, wherein said processing comprises utilizing radiation.

7. The method of Claim 1, wherein said processing began during said nanoimprinting.

8. A patterned media disk comprising:
a disk substrate;
a material deposited above said disk substrate, wherein said material was nanoimprinted and said material was transformed into a substantially solidified material; and
a magnetic material deposited above said substantially solidified material.

9. The patterned media disk of Claim 8, wherein said material comprises hydrogen silsesquioxane.

10. The patterned media disk of Claim 8, wherein said material comprises a polyamide based polymer.

11. The patterned media disk of Claim 8, wherein said material comprises a silicon containing resist.

12. The patterned media disk of Claim 8, wherein said substantially solidified material comprises silicon dioxide.

13. The patterned media disk of Claim 8, wherein said material was transformed into said substantially solidified material is selected from the group consisting of utilizing an electron beam, a thermal process, an optical process, radiation, and cooling.

14. The patterned media disk of Claim 8, wherein said material began to be transformed while being nanoimprinted.

15. Application instructions on a computer-usable medium where the instructions when executed effect a method comprising:
depositing a material above a disk substrate, said disk substrate for a data storage device;
nanoimprinting said material above said disk substrate;
transforming said material into a substantially solidified material; and
depositing a magnetic material above said substantially solidified material.

16. The application instructions of Claim 15, wherein said material comprises hydrogen silsesquioxane.

17. The application instructions of Claim 15, wherein said material comprises a polyamide based polymer.

18. The application instructions of Claim 15, wherein said material comprises a silicon containing resist.

19. The application instructions of Claim 15, wherein said transforming is selected from the group consisting of utilizing an electron beam, thermal, optical, radiation, and cooling.

20. The application instructions of Claim 15, wherein said transforming began during said nanoimprinting and finished after said nanoimprinting.
